# FASCICULE DE BREVET EUROPEEN

(11) **EP 0 669 236 B1**
(45) Date de publication et mention de la délivrance du brevet: **02.09.1998**
(21) Numéro de dépôt: 95102068.4
(22) Date de dépôt: 15.02.1995
(51) Int. Cl.: B60S 1/34, F16D 1/06

(54) **Essuie-glace de véhicule automobile comportant des moyens perfectionnés de liaison en rotation de la tête d'entraînement avec l'arbre moteur**
Kraftfahrzeug-Scheibenwischer mit verbesserten Verbindungsmitteln zwischen dem Befestigungsteil und der rotierenden Antriebswelle
Motor vehicle windscreen wiper with improved coupling means between the wiper arm linking piece and the rotary drive shaft

(30) Priorité: 28.02.1994 FR 9402239
(43) Date de publication de la demande: 30.08.1995
(73) Titulaire: VALEO SYSTEMES D'ESSUYAGE, 78321 La Verrière (FR)
(72) Inventeur: Berge, Gilles, F-78120 Clairefontaine/Yvelines (FR); Princet, Joel, F-86100 Chatellerault (FR); Eustache, Jean-Pierre, F-92160 Antony (FR); Bouy, Gilbert, F-86100 Chatellerault (FR)
(74) Mandataire: Gamonal, Didier

(56) Documents cités:
- EP-A- 0 491 603
- DE-A- 3 319 867
- US-A- 3 429 597
- PATENT ABSTRACTS OF JAPAN vol. 9 no. 231 (M-414) ,18 Septembre 1985 & JP-A-60 088663 (NIPPON DENSO) 18 Mai 1985,

## Description

La présente invention concerne un dispositif d'essuie-glace.

L'invention concerne plus particulièrement un dispositif du type comportant un arbre moteur rotatif et une tête d'entraînement sur laquelle est articulé un bras d'essuie-glace, et du type comportant des moyens d'accouplement entre la tête d'entraînement et l'extrémité libre de l'arbre moteur, qui est reçue dans un logement formé dans la tête d'entraînement, qui comportent des moyens de liaison en rotation par coopération de formes et des moyens de serrage axial comportant un ensemble du type vis-écrou. Un tel dispositif est par exemple décrit dans US-A-3 429 597.

Selon une conception connue, l'extrémité de l'arbre d'entraînement comporte un tronçon conique dont la surface est munie d'une série de crans adjacents en relief réalisés par moletage qui s'étendent parallèlement à l'axe, et un tronçon d'extrémité fileté.

Le tronçon conique est reçu dans un évidement de profil complémentaire, à paroi lisse, formé dans la tête d'entraînement tandis que l'extrémité filetée fait saillie au-dessus de la face supérieure de la tête d'entraînement pour être vissée dans un écrou de serrage dont la face annulaire de serrage coopère avec la face supérieure de la tête d'entraînement.

L'opération de serrage en position montée de la tête d'entraînement au moyen de l'écrou a pour effet de provoquer une pénétration des crans dans la matière constitutive de la paroi de l'évidement conique de la tête d'entraînement.

L'effort de serrage appliqué à l'écrou provoque une pénétration progressive des crans dans la tête d'entraînement qui s'impriment dans la paroi pour constituer les moyens d'entraînement en rotation de la tête d'entraînement par l'arbre moteur.

Le document JP-A-88 663/85 décrit une réalisation de ce type appliquée à la fixation d'une manivelle d'un mécanisme d'essuyage sur l'arbre d'entraînement de l'essuie-glace.

Cette conception particulièrement simple a pour inconvénient de ne pas procurer une qualité toujours suffisante de l'entraînement en rotation de la tête d'entraînement par l'arbre moteur, les crans adjacents réalisés par molletage sur un tronçon conique de l'arbre moteur s'avérant parfois insuffisants compte tenu de l'importance des couples à transmettre.

De plus, en cas de démontage et de remontage successifs de la tête d'entraînement sur l'extrémité molletée de l'arbre moteur, la multiplicité des crans adjacents et la faiblesse de la profondeur de leurs empreintes dans la tête d'entraînement ne permettent pas de réaliser à nouveau le même positionnement angulaire relatif de la tête d'entraînement par rapport à l'arbre moteur.

Afin de remédier à ces inconvénients, l'invention propose un dispositif d'essuie-glace du type mentionné précédemment, caractérisé en ce que les moyens de liaison en rotation par coopération de formes comportent une série de dents associées à l'arbre moteur, réparties angulairement de manière régulière autour de l'axe de l'arbre moteur et espacées angulairement les unes des autres et qui coopèrent avec une surface de portée associée formée dans la tête d'entraînement.

Selon différents modes de réalisation de l'invention :
- chacune des dents présente, en section transversale, un profil sensiblement triangulaire ;
- chacune des dents présente une section transversale triangulaire sensiblement constante sur toute sa longueur ;
- chacune des dents présente une section transversale triangulaire qui varie le long de la dent ;
- les dents sont agencées sur une surface de révolution centrée sur l'axe de l'arbre moteur ;
- la surface de révolution est un tronc de cône ;
- la surface de portée est une surface de révolution complémentaire de la surface de révolution sur laquelle sont agencées les dents ;
- les dents sont réalisées venues de matière avec le corps de l'arbre moteur ;
- les dents sont réalisées sur un élément porté lié en rotation à l'arbre moteur ; et
- le logement comporte une surface radiale de butée qui coopère avec une surface radiale d'appui de l'arbre moteur pour définir une position axiale précise de la tête d'entraînement par rapport à l'arbre moteur.

D'autres caractéristiques et avantages de l'invention apparaîtront à la lecture de la description détaillée qui va suivre pour la compréhension de laquelle on se reportera aux dessins annexés dans lesquels :
- La figure 1 est une vue en perspective éclatée d'un premier mode de réalisation d'un dispositif d'essuie-glace conforme aux enseignements de l'invention ;
- la figure 2 est une vue éclatée en section axiale des composants du dispositif illustré sur la figure 1 ;
- la figure 3 est une vue en section axiale du dispositif illustré en position montée et serrée ;
- la figure 4 est une vue en perspective éclatée d'un second mode de réalisation d'un dispositif d'essuie-glace conforme aux enseignements de l'invention ; et
- la figure 5 est une vue en section axiale du dispositif illustré à la figure 4 dont les composants sont illustrés en position montée et serrée.

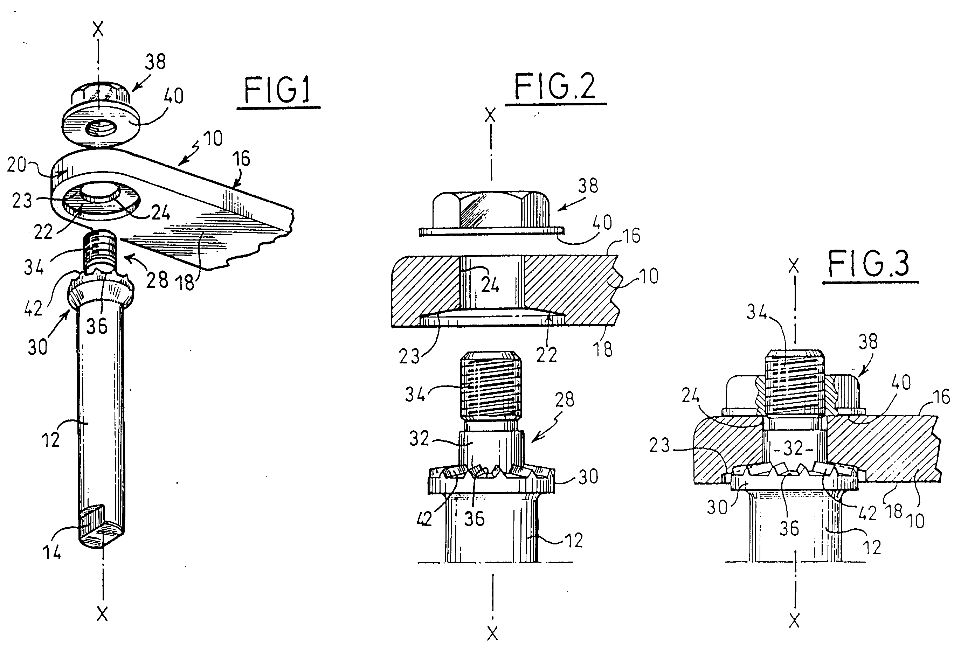

On a représenté sur la figure 1 une tête 10 d'entraînement d'un bras d'essuie-glace, non représenté, qui est monté articulé sur la tête d'entraînement autour d'un axe sensiblement perpendiculaire à l'axe X-X d'entraînement en rotation de la tête 10.

L'entraînement de la tête 10 est assuré au moyen d'un arbre rotatif moteur 12 qui comporte des moyens 14 pour son entraînement en rotation, autour de l'axe X-X, par un ensemble moto-réducteur (non représenté) sur les figures.

La tête d'entraînement est une pièce moulée en métal de forme générale allongée qui comporte des faces supérieure 16 et inférieure 18 sensiblement parallèles et planes.

Au voisinage de son extrémité arrière 20, la tête d'entraînement 10 comporte un logement 22 réalisé sous la forme d'un lamage légèrement conique formé dans la face inférieure 18 qui se prolonge par un perçage central 24 qui débouche dans la face supérieure 16 de la tête d'entraînement 10.

La portion d'extrémité libre 28 de l'arbre moteur 12 comporte successivement, verticalement du bas en haut en considérant les figures, un épaulement radial externe 30, un tronçon de liaison lisse 32 et un tronçon cylindrique d'extrémité fileté 34.

La face supérieure légèrement conique 36 de l'épaulement 30 définit une surface annulaire radiale d'appui qui, en position montée et serrée comme cela est illustré sur la figure 3, vient en contact avec la surface de butée constituée par le fond légèrement conique complémentaire 23 du lamage 22.

Le tronçon de liaison 32 est prévu pour passer a travers le perçage 24 tandis que le tronçon d'extrémité fileté fait saillie au-delà de la face supérieure 16 pour être vissé dans un écrou de serrage 38 dont la face annulaire inférieure de serrage 40 est prévue pour coopérer avec la portion en vis-à-vis de la face supérieure 16 qui entoure le perçage 24.

Les moyens de liaison en rotation de la tête d'entraînement 10 par l'arbre moteur 12 sont constitués par une série de dents 42 qui sont formées en relief sur la surface radiale d'appui 36.

Les dents 42 sont réparties angulairement de manière régulière autour de l'axe X-X et elles s'étendent radialement en direction de l'axe.

Chaque dent présente une section sensiblement triangulaire et constante sur sa longueur et les dents sont espacées l'une de l'autre par des portions en forme de secteurs angulaires de la surface radiale d'appui 36.

Après assemblage des composants et leur serrage axial au moyen de l'écrou 38, et comme cela est illustré sur la figure 3, on constate que les dents 42 ont pénétré dans la matière constitutive du fond 23 du logement 22 et que ce fond 23 est en butée axiale, entre les dents 42, contre la surface radiale d'appui 36, définissant ainsi une position axiale précise de la tête d'entraînement 10 par rapport à l'arbre d'entraînement 12, c'est-à-dire dont une cote verticale précise de la tête d'entraînement par rapport à la vitre à essuyer (non représentée).

Dans le mode de réalisation illustré sur la figure, le collet radial 30 qui délimite la surface radiale d'appui annulaire 36 et qui comporte les dents d'entraînement en rotation 42 est réalisé venu de matière par forgeage et matriçage avec le corps de l'arbre moteur 12.

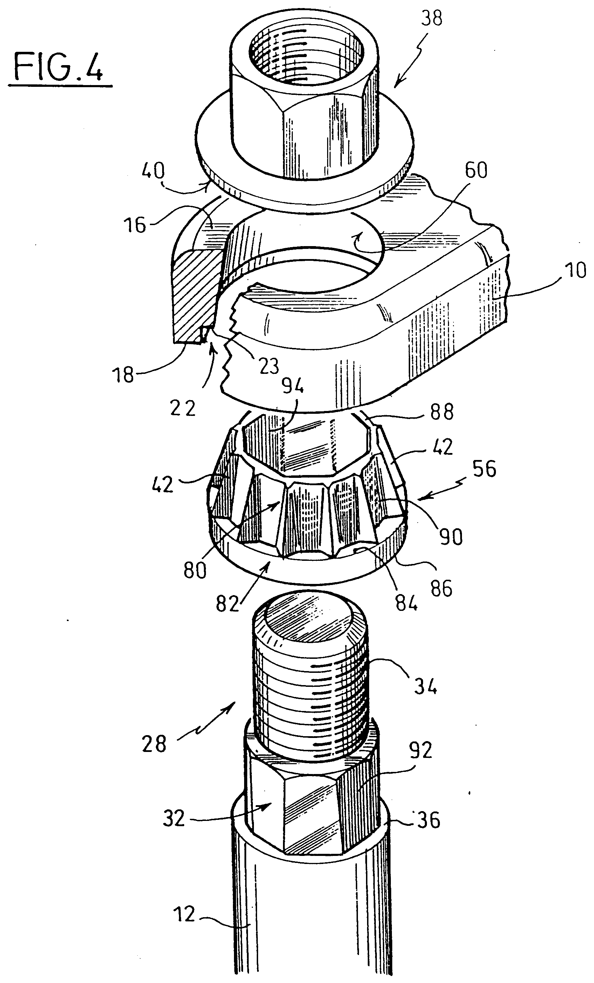

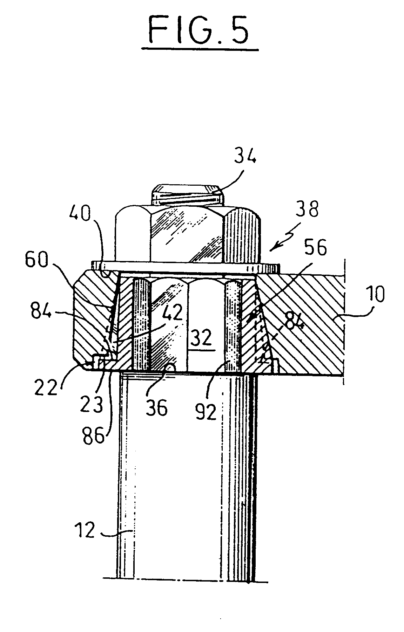

Selon une variante de réalisation, non représentée sur les figures, l'épaulement 30 peut être réalisé sous la forme d'un élément intermédiaire rapporté sur l'extrémité 28 de l'arbre 12, du type de celui qui sera décrit et représenté ultérieurement en référence au troisième mode de réalisation illustré aux figures 4 et 5.

Outre l'excellente qualité de la liaison en rotation de la tête d'entraînement 10 par rapport a l'arbre moteur 12, la conception des dents triangulaires et espacées 42 permet, en cas de démontage et de remontage, de repositionner angulairement de manière précise la tête d'entraînement par rapport à l'arbre de rotation 12 en mettant en concordance les dents 42 avec les empreintes qu'elles ont préalablement imprimées dans le fond 23 du logement 22 lors de la première opération de montage et de serrage.

On décrira maintenant le deuxième mode de réalisation illustré aux figures 4 et 5 sur lesquelles des éléments identiques ou similaires à ceux illustrés sur les figures 1 à 3 sont désignés par les mêmes chiffres de référence.

Dans ce second mode de réalisation, l'appui de la surface annulaire de butée 23 formée dans un lamage inférieur 22 formé dans la face inférieure 18 de la tête d'entraînement 10 sur la surface radiale annulaire d'appui 36 formée à l'extrémité libre 28 de l'arbre moteur 12 est un appui indirect qui s'effectue à travers l'élément intermédiaire de liaison 56.

A cet effet, un élément intermédiaire 56 est agencé dans un évidement 60 qui débouche dans la face inférieure 18 de la tête d'entraînement 10 et qui se termine par le lamage 22 définissant la surface radiale annulaire de butée 23.

L'élément intermédiaire 56 est constitué pour l'essentiel par une jupe annulaire sensiblement cylindrique 80 qui se prolonge à sa partie inférieure par un collet radial extérieur 82 qui est prévu pour être reçu dans le lamage 22 et dont la face radiale annulaire supérieure 84 est prévue pour venir en appui axial contre la surface radiale annulaire de butée 23.

La face radiale annulaire inférieure 86 du collet radial extérieur 82 est prévue pour venir en appui contre la surface radiale annulaire d'appui 36 formée sur l'extrémité libre 28 de l'arbre moteur 12.

Les dents 42 sont réparties angulairement de manière régulière de long de la paroi externe de la jupe 80 de l'élément intermédiaire de liaison 86 et elles présentent une section triangulaire allant en s'amincissant depuis le collet inférieur 42 jusqu'au bord supérieur libre 88 de la jupe 80 de manière à constituer des coins qui vont pénétrer de manière progressive dans la matière constitutive de la paroi de l'évidement 60 lors de la première opération de serrage.

Les dents 42 sont réparties régulièrement et espacées par des portions cylindriques 90 de la jupe 80.

Le serrage axial de l'ensemble est assuré au moyen d'un écrou 38 dont la face inférieure annulaire de serrage 40 coopère avec la face supérieure 16 de la tête d'entraînement 10 et qui est vissé sur l'extrémité libre filetée 34 de l'arbre moteur 12 qui fait saillie axialement au-delà de la face supérieure 16.

Lors de la première opération de montage et de serrage, l'opérateur effectue un serrage de l'écrou 38 jusqu'à ce que les dents 42 pénètrent dans la paroi de l'évidement 60 et jusqu'à ce que la surface radiale annulaire de butée 23 vienne en appui contre la face annulaire supérieure 84 du collet radial extérieur 82 de la pièce intermédiaire de liaison en rotation 56.

Une fois le serrage axial effectué, la position axiale relative de la tête d'entraînement 10 par rapport à l'arbre 12 est assurée avec précision du fait de l'appui mutuel des surfaces 23 et 84 et des surfaces 86 et 36.

La liaison en rotation entre l'élément intermédiaire 56 et la portion d'extrémité 28 de l'arbre 12 est assurée par coopération de formes complémentaires. A cet effet, le tronçon intermédiaire 32 de l'extrémité libre 28 de l'arbre moteur 12 comporte une série de méplats 92 et il est reçu à l'intérieur de la jupe 90 de l'élément intermédiaire de liaison en rotation 56 qui comporte des méplats correspondants 94.

Dans ce mode de réalisation, et en cas de démontage de la tête d'entraînement, l'élément intermédiaire 56 reste en place dans son logement 60, et d'indexation angulaire de la tête d'entrainement 10 par rapport à l'arbre 12 est assurée par les moyens de liaison en rotation 46-68 ou 92-94 de l'élément intermédiaire 56 avec l'arbre 12.

## Revendications

1. Dispositif d'essuie-glace du type comportant un arbre moteur rotatif (12) et une tête d'entraînement (10) sur laquelle est articulé un bras d'essuie-glace, et du type comportant des moyens d'accouplement entre la tête d'entraînement (10) et l'extrémité libre (28) de l'arbre moteur (12), qui est reçue dans un logement (22, 24) formé dans la tête d'entraînement (10), qui comportent des moyens de liaison en rotation par coopération de formes (42) et des moyens de serrage axial (38) comportant un ensemble du type vis-écrou, caractérisé en ce que les moyens de liaison en rotation par coopération de formes comportent une série de dents (42) associées à l'arbre moteur (12), réparties angulairement de manière régulière autour de l'axe (X-X) de l'arbre moteur (12) et espacées angulairement les unes des autres et qui coopèrent avec une surface de portée (23) associée formée dans la tête d'entraînement (10).

2. Essuie-glace selon la revendication 1, caractérisé en ce que chacune des dents (42) présente, en section transversale, un profil sensiblement triangulaire.

3. Essuie-glace selon la revendication 2, caractérisé en ce que chacune des dents présente une section transversale triangulaire sensiblement constante sur toute sa longueur.

4. Essuie-glace selon la revendication 2, caractérisé en ce que chacune des dents (42) présente une section transversale triangulaire qui varie le long de la dent (42).

5. Essuie-glace selon l'une quelconque des revendications précédentes, caractérisé en ce que les dents sont agencées sur une surface de révolution (36, 80) centrée sur l'axe (X-X) de l'arbre moteur (12).

6. Essuie-glace selon la revendication 5, caractérisé en ce que la surface de révolution est un tronc de cône.

7. Essuie-glace selon l'une des revendications 5 ou 6, caractérisé en ce que la surface de portée (23) est une surface de révolution complémentaire de la surface de révolution (36, 80) sur laquelle sont agencées les dents (42).

8. Essuie-glace selon l'une quelconque des revendications précédentes, caractérisé en ce que les dents (42) sont réalisées venues de matière avec le corps de l'arbre moteur (12).

9. Essuie-glace selon l'une quelconque des revendications 1 à 7, caractérisé en ce que les dents (42) sont réalisées sur un élément rapporté (56) lié en rotation à l'arbre moteur (12).

10. Essuie-glace selon l'une quelconque des revendications précédentes, caractérisé en ce que le logement (22) comporte une surface radiale de butée (23) qui coopère avec une surface radiale d'appui (36) de l'arbre moteur (12) pour définir une position axiale précise de la tête d'entraînement (10) par rapport à l'arbre moteur (12).

## Claims

1. Windscreen wiper apparatus of the type comprising a rotary motor shaft (12) and a drive head (10) on which a screen wiper arm is articulated, and of the type including coupling means between the drive head (10) and the free end (28) of the motor shaft (12), which is received in a housing (22, 24) formed in the drive head (10), the coupling means comprising coupling means (42) for rotary coupling by mating cooperation, and axial clamping means (38) comprising an assembly of the screw and nut type, characterised in that the rotary mating coupling means comprise a set of teeth (42) associated with the motor shaft (12), which are spaced apart circumferentially at regular intervals about the axis (X-X) of the motor shaft (12), are spaced circumferentially from each other, and cooperate with an associated engagement surface (23) formed in the drive head (10).

2. A screen wiper according to Claim 1, characterised in that each of the teeth (42) has a substantially triangular profile in transverse cross section.

3. A screen wiper according to Claim 2, characterised in that each of the teeth has a triangular transverse cross section which is substantially constant over its whole length.

4. A screen wiper according to Claim 2, characterised in that each of the teeth (42) has a triangular transverse cross section which varies along the tooth (42).

5. A screen wiper according to any one of the preceding Claims, characterised in that the teeth are arranged on a surface of revolution (36, 80) centred on the axis (X-X) of the motor shaft (12).

6. A screen wiper according to Claim 5, characterised in that the surface of revolution is a frustum of a cone.

7. A screen wiper according to Claim 5 or Claim 6, characterised in that the engagement surface (23) is a surface of revolution complementary to the surface of revolution (36, 80) on which the teeth (42) are arranged.

8. A screen wiper according to any one of the preceding Claims, characterised in that the teeth (42) are formed integrally with the body of the motor shaft (12).

9. A screen wiper according to any one of Claims 1 to 7, characterised in that the teeth (42) are formed on an attached element (56) which is coupled in rotation to the motor shaft (12).

10. A screen wiper according to any one of the preceding Claims, characterised in that the housing (22) comprises a radial abutment surface (23) which cooperates with a radial engagement surface (36) of the motor shaft (12) so as to define a precise axial position for the drive head (10) with respect to the motor shaft (12).

## Patentansprüche

1. Scheibenwischer in der Ausführung mit einer rotierenden Antriebswelle (12) und einem Antriebskopf (10), an dem ein Scheibenwischerarm angelenkt ist, und in der Ausführung mit Kupplungsmitteln zwischen dem Antriebskopf (10) und dem freien Ende (28) der Antriebswelle (12), das in eine im Antriebskopf (10) ausgebildete Aufnahme (22, 24) eingesetzt ist, die Mittel zur drehfesten Verbindung durch formschlüssiges Zusammenwirken (42) und Mittel zur axiale Aufklemmung (38) mit einer Schrauben-Mutter-Konstruktion umfassen, **dadurch gekennzeichnet,** daß die Mittel zur drehfesten Verbindung durch formschlüssiges Zusammenwirken eine Reihe von mit der Antriebswelle (12) verbundenen Zähnen (42) umfassen, die winklig gleichmäßig um die Achse (X-X) der Antriebswelle (12) verteilt und winklig zueinander beabstandet sind und die mit einer zugehörigen Auflagefläche (23) zusammenwirken, die im Antriebskopf (10) ausgebildet ist.

2. Scheibenwischer nach Anspruch 1 , **dadurch gekennzeichnet,** daß jeder der Zähne (42) im Querschnitt ein in etwa dreieckiges Profil aufweist.

3. Scheibenwischer nach Anspruch 2 , **dadurch gekennzeichnet,** daß jeder der Zähne einen dreieckigen Querschnitt aufweist, der über seine ganze Länge in etwa konstant ist.

4. Scheibenwischer nach Anspruch 2 , **dadurch gekennzeichnet,** daß jeder der Zähne (42) einen dreieckigen Querschnitt aufweist, der sich über die Länge des Zahns (42) verändert.

5. Scheibenwischer nach einem der vorangehenden Ansprüche, **dadurch gekennzeichnet,** daß die Zähne auf einer rotationssymmetrischen Fläche (36, 80) angeordnet sind, die auf die Achse (X-X) der Antriebswelle (12) zentriert ist.

6. Scheibenwischer nach Anspruch 5 , **dadurch gekennzeichnet,** daß die rotationssymmetrische Fläche ein Kegelstumpf ist.

7. Scheibenwischer nach einem der Ansprüche 5 oder 6, **dadurch gekennzeichnet,** daß die Auflagefläche (23) eine rotationssymmetrische Fläche entsprechend der rotationssymmetrischen Fläche (36, 80) ist, auf der die Zähne (42) angeordnet sind.

8. Scheibenwischer nach einem der vorangehenden Ansprüche, **dadurch gekennzeichnet,** daß die Zähne (42) einstückig mit dem Körper der Antriebswelle (12) ausgeführt sind.

9. Scheibenwischer nach einem der Ansprüche 1 bis 7, **dadurch gekennzeichnet**, daß die Zähne (42) auf einem angesetzten Element (56) ausgeführt sind, das drehfest mit der Antriebswelle (12) verbunden ist.

10. Scheibenwischer nach einem der vorangehenden Ansprüche, **dadurch gekennzeichnet,** daß die Aufnahme (22) eine radiale Anschlagfläche (23) umfaßt, die mit einer radialen Auflagefläche (36) der Antriebswelle (12) zusammenwirkt, um eine präzise axiale Position des Antriebskopfes (10) im Verhältnis zur Antriebswelle (12) zu definieren.
